# EUROPEAN PATENT APPLICATION

(11) **EP 4 589 866 A1**
(43) Date of publication of application: **23.07.2025**
(21) Application number: 23870279.9
(22) Date of filing: 11.09.2023
(51) Int. Cl.: H04J 3/06

(54) **TIME SYNCHRONIZATION METHOD AND TIME SYNCHRONIZATION APPARATUS**

(30) Priority: 30.09.2022 CN 202211214615
(71) Applicant: Huawei Technologies Co., Ltd., Shenzhen, Guangdong 518129 (CN)
(72) Inventor: ZANG, Xin, Shenzhen, Guangdong 518129 (CN); ZHOU, Runze, Shenzhen, Guangdong 518129 (CN); WANG, Yuan, Shenzhen, Guangdong 518129 (CN)
(74) Representative: Thun, Clemens
(86) International application number: PCT/CN2023/117995
(87) International publication number: WO 2024/067040

(57) **Abstract**

This application provides a time synchronization method and an apparatus. The method includes: A time synchronization function network element may recalculate, based on time provision data generated when an anomaly occurs in a timing synchronization state of a node in a communication system, a new time provision error for an access network device to determine a time provision method; and the time synchronization function network element may compare the recalculated time provision error with the time provision data of the access network device, to assist the access network device in re-determining the time provision method. According to embodiments of this application, it can be determined whether a requirement for providing time for a terminal device can still be met when an anomaly occurs in the communication system, improving accuracy and stability of clock synchronization.

## Description

This application claims priority to Chinese Patent Application No. 202211214615.5, filed with the China National Intellectual Property Administration on September 30, 2022 and entitled "TIME SYNCHRONIZATION METHOD AND TIME SYNCHRONIZATION APPARATUS", which is incorporated herein by reference in its entirety.

### TECHNICAL FIELD

This application relates to the communication field, and more specifically, to a time synchronization method and a time synchronization apparatus.

### BACKGROUND

All tasks are based on a clock reference in fields such as communication and industrial control. Therefore, precise clock synchronization is a basic standard. TSN is a mature standard defined by the institute of electrical and electronics engineers (institute of electrical and electronics engineers, IEEE) and widely used in the industry. The TSN can resolve problems of clock synchronization and delay calculation in a network to ensure high consistency of task scheduling in the entire network. Many vertical industry users hope that their access to a TSN network can be implemented via a 5G network instead of in a wired manner. Therefore, when a user accesses the TSN network via a 5G system, an existing control function of the TSN network can be implemented via the TSN network, and various performance indicators of data transmission of the TSN network can be met via the 5G system.

For a combined system of the 5G system and a TSN system, a TSN clock source sends a generalized precision time protocol (generalized precision time protocol, gPTP) packet to each gPTP node in the TSN system, and the 5G system may also be considered as a gPTP node in the TSN system. In other words, to obtain accurate TSN clock information in the TSN system, precise clock synchronization of the 5G system in the TSN system is necessary. However, when a node such as a radio access network (radio access network, RAN) device or a user plane function (user plane function, UPF) network element in the 5G system encounters an anomaly during clock synchronization, there is currently no related solution for determining whether the 5G system can still meet a requirement for providing time for a terminal device when an anomaly occurs.

### SUMMARY

Embodiments of this application provide a clock synchronization method and an apparatus, to determine whether a requirement for providing time for a terminal device can still be met when an anomaly occurs in a communication system, so that accuracy and stability of clock synchronization are improved.

According to a first aspect, a clock synchronization method is provided. The method may be performed by a time synchronization function network element, may be performed by a component (for example, a processor, a chip, or a chip system) of the synchronization function network element, or may be implemented by a logical module or software that can implement all or some functions of the synchronization function network element. The method includes: The time synchronization function network element receives first information of a first device, where the first information indicates information indicating that clock synchronization quality of a first access network device changes; and the time synchronization function network element determines a first error of the first access network device based on the first information, and determines whether the first error meets a total time provision error configured by a network for a first service, where the total time provision error is used by the first access network device to provide time for a first terminal device, and the first error is an error generated when clock quality of the first access network device changes.

Specifically, the first information may be timing state notification information. The first information may alternatively be information indicating that a timing synchronization state is abnormal. That a timing state is abnormal may also mean that a timing state changes, for example, degradation, improvement, or a fault of the timing state occurs.

Specifically, the time synchronization function network element may be a time sensitive communication and time synchronization function (time sensitive communication and time synchronization function, TSCTSF) network element, or may be another network element. This is not limited in this application.

Specifically, the total time provision error may be carried in a first service request, and a service type of the first service is not limited in this application.

According to the foregoing method, it can be determined whether a requirement for providing time for a terminal device can still be met when an anomaly occurs in a communication system, so that accuracy and stability of time synchronization are improved.

With reference to the first aspect, in some implementations of the first aspect, when the first error does not meet the total time provision error configured by the network for the first service, the method further includes: The time synchronization function network element determines a second error of the first access network device based on the first information, where the second error is used by the first access network device to provide time for the first terminal device; and the time synchronization function network element sends the second error to the first access network device.

Specifically, that the first error does not meet the total time provision error configured by the network for the first service may be that the first error is greater than or equal to the total time provision error configured by the network for the first service.

Specifically, at least one time provision method supported by the first access network device generates different time provision errors, and an appropriate time provision method may be selected based on a range of the second error to provide time, to implement time synchronization of the first terminal device.

With reference to the first aspect, in some implementations of the first aspect, the first information further includes an identifier of the first access network device, and/or clock quality information (clock quality information).

With reference to the first aspect, in some implementations of the first aspect, the first device includes the first access network device, a mobility management network element AMF, or an operation, administration, and maintenance OAM device.

To be specific, the time synchronization function network element may obtain the first information from an access network device whose timing state is abnormal, and the time synchronization function network element may also subscribe to, from the OAM in advance, the first information of the access network device whose timing state is abnormal.

According to the foregoing method, it can be ensured that the time synchronization function network element obtains data of an abnormal timing synchronization state in time, and flexibly adjusts an error used by a RAN for time provision.

With reference to the first aspect, in some implementations of the first aspect, if the first information further includes a third error, that the time synchronization function network element sends the second error to the first access network device further includes: The time synchronization function network element sends the second error when determining that the third error is less than or equal to the second error, where the third error is an error generated due to a time provision capability of the first access network device.

Specifically, the error (namely, the third error) generated due to the time provision capability of the first access network device may be a minimum value of errors generated according to the at least one time provision method supported by the first access network device, or may be any one of errors generated according to the at least one time provision method supported by the first access network device. This is not limited in this application.

According to the foregoing method, the time synchronization function network element compares an error (that is, the second error) of the first access network device that is re-determined when the timing synchronization state of the first access network device is abnormal with the error of the time provision capability of the first access network device, and sends the re-determined second error to the first access network device after a requirement is met, so that a success rate of re-determining the time provision method by the first access network device can be improved.

With reference to the first aspect, in some implementations of the first aspect, if the first information further includes a fourth error, the method further includes: The time synchronization function network element determines that the fourth error is less than or equal to the second error, where the fourth error is an error generated according to a current time provision method of the first access network device; and the time synchronization function network element sends a time provision indication to the first access network device, where the time provision indication indicates the first access network device to continue to provide time for the first terminal device.

According to the foregoing method, when a time provision requirement is still met after the clock synchronization quality of the first access network device changes, the first access network device may continue to provide time for the first terminal device.

With reference to the first aspect, in some implementations of the first aspect, the method further includes: The time synchronization function network element receives second information, where the second information indicates that the first access network device cannot provide time for the first terminal device, and the second information is sent when the first access network device determines that at least one time provision method supported by the first access network device cannot meet a time provision requirement of the second error. In another implementation, if the time synchronization function network element determines that the fourth error is less than or equal to the second error, the time synchronization function network element may also send the time provision indication to the first access network device, where the time provision indication indicates the first access network device to continue to provide time for the first terminal device.

In still another implementation, if the time synchronization function network element determines, based on the first information, that the first access network device cannot provide a time synchronization service for the first terminal device due to an abnormal timing state, the time synchronization function network element may directly send a time synchronization anomaly notification or a clock degradation notification of the first access network device to an application function network element.

With reference to the first aspect, in some implementations of the first aspect, the method further includes: The time synchronization function network element determines at least one second access network device, where the at least one second access network device provides time for at least one second terminal device, and the at least one second terminal device and the first terminal device belong to one generalized precision time protocol gPTP instance; and the time synchronization function network element sends the second error to the at least one second access network device.

With reference to the first aspect, in some implementations of the first aspect, before the time synchronization function network element sends the second error to the at least one second access network device, the method further includes: The time synchronization function network element obtains time provision data of the at least one second access network device from the access and mobility management function (access and mobility management function, AMF) network element or the operation, administration, and maintenance OAM device.

Specifically, the time provision data may include an error generated due to a time provision capability of the at least one second access network device, and/or an error generated according to a current time provision method of the at least one second access network device.

For a method in which the time synchronization function network element compares the error generated due to the time provision capability of the at least one second access network device with the second error, refer to the description of the first access network device. For a method in which the time synchronization function network element compares the error generated according to the current time provision method of the at least one second access network device with the second error, refer to the description of the first access network device. Details are not described herein again.

With reference to the first aspect, in some implementations of the first aspect, the method further includes: The time synchronization function network element receives third information of a second device, where the third information indicates the at least one second access network device, and the second device includes a mobility management network element or an operation, administration, and maintenance OAM device.

According to a second aspect, a time synchronization method is provided. The method may be performed by a time synchronization function network element, may be performed by a component (for example, a processor, a chip, or a chip system) of the synchronization function network element, or may be implemented by a logical module or software that can implement all or some functions of the synchronization function network element. The method includes: The time synchronization function network element receives fourth information of a third device, where the fourth information indicates information indicating that clock synchronization quality of a first user plane function network element changes; and the time synchronization function network element determines a fifth error of at least one second access network device based on the fourth information, and determines whether the fifth error meets at least one total time provision error configured by a network for at least one first service, where the at least one first service one-to-one corresponds to the at least one total time provision error, and the fifth error is an error generated when clock quality of the first user plane function network element changes.

Specifically, the fourth information may be timing state notification information. The fourth information may alternatively be information indicating that a time synchronization state is abnormal. That a timing state is abnormal may also mean that a timing state changes, for example, degradation, improvement, or a fault of the timing state occurs.

Specifically, the total time provision error may be carried in a first service request, and a service type of the first service is not limited in this application.

Specifically, the time synchronization function network element may be a time sensitive communication and time synchronization function (time sensitive communication and time synchronization function, TSCTSF) network element, or may be another network element. This is not limited in this application.

According to the foregoing method, it can be determined whether a requirement for providing time for a terminal device can still be met when an anomaly occurs in a communication system, so that accuracy and stability of time synchronization are improved.

With reference to the second aspect, in some implementations of the second aspect, when the fifth error does not meet the total time provision error configured by the network for the first service, the method further includes: The time synchronization function network element determines a second error of the at least one second access network device based on the fourth information, where the second error is used by the at least one second access network device to provide time for at least one second terminal device, and the at least one second terminal device belongs to one generalized precision time protocol gPTP instance; and the time synchronization function network element sends the second error to the second access network device.

Specifically, that the fifth error does not meet the total time provision error configured by the network for the first service may be that the fifth error is greater than or equal to the total time provision error configured by the network for the first service.

Specifically, at least one time provision method supported by the second access network device generates different time provision errors, and an appropriate time provision method may be selected based on a range of the second error to provide time, to implement time synchronization of a first terminal device.

With reference to the second aspect, in some implementations of the second aspect, the fourth information further includes an identifier of the first user plane function network element, and/or clock quality information (clock quality information).

With reference to the second aspect, in some implementations of the second aspect, the third device includes the first user plane function network element or an operation, administration, and maintenance OAM device.

To be specific, the time synchronization function network element may obtain the fourth information from a user plane function network element whose timing state is abnormal, and the time synchronization function network element may also subscribe to, from the OAM in advance, the fourth information of the user plane function network element whose timing state is abnormal.

According to the foregoing method, it can be ensured that the time synchronization function network element obtains data of an abnormal time synchronization state in time, and flexibly adjusts an error used by a RAN for time provision.

With reference to the second aspect, in some implementations of the second aspect, if the third information includes at least one sixth error, that the time synchronization function network element sends the second error to the second access network device further includes: The time synchronization function network element sends the second error when determining that the sixth error is less than or equal to the second error, where the at least one sixth error is an error generated due to a time provision capability of the at least one second access network device.

Specifically, the error generated due to the time provision capability of the second access network device may be a minimum value of errors generated according to the at least one time provision method supported by the second access network device, or may be any one of errors generated according to the at least one time provision method supported by the second access network device. This is not limited in this application.

According to the foregoing method, the time synchronization function network element compares an error (that is, the second error) of the second access network device that is re-determined when the timing synchronization state of the first user plane function network element is abnormal with the error of the time provision capability of the second access network device, and sends the re-determined second error to the second access network device after a requirement is met, so that a success rate of re-determining the time provision method by the second access network device can be improved. With reference to the second aspect, in some implementations of the second aspect, if the third information further includes at least one seventh error, the method further includes: The time synchronization function network element determines that the seventh error is less than or equal to the second error, where the at least one seventh error is an error generated according to a current time provision method of the at least one second access network device; and the time synchronization function network element sends a time provision indication to the second access network device, where the time provision indication indicates the second access network device to continue to provide time for the second terminal device.

According to the foregoing method, when the second access network device still meets a time provision requirement after the clock synchronization quality of the first user plane function network element changes, the second access network device may continue to provide time for the second terminal device.

Specifically, the sixth error has a one-to-one correspondence with the second access network device, but the at least one sixth error and the at least one second access network device are not necessarily same in quantity. In other words, the third information does not necessarily include the sixth error of each of the at least one second access network device.

Similarly, the seventh error has a one-to-one correspondence with the second access network device, but the at least one seventh error and the at least one second access network device are not necessarily same in quantity. In other words, the third information does not necessarily include the seventh error of each of the at least one second access network device.

With reference to the second aspect, in some implementations of the second aspect, if the third information includes the sixth error, that the time synchronization function network element sends the second error further includes: The time synchronization function network element sends the second error when determining that the sixth error is less than or equal to the second error.

In another implementation, if the time synchronization function network element determines that the seventh error is less than or equal to the second error, the time synchronization function network element may also send the time provision indication to the second access network device, where the time provision indication indicates the second access network device to continue to provide time for the second terminal device.

With reference to the second aspect, in some implementations of the second aspect, the method further includes: The time synchronization function network element receives second information, where the second information indicates that the second access network device cannot provide time for the second terminal device, and the second information is sent when the second access network device determines that the at least one time provision method supported by the second access network device cannot meet a time provision requirement of the second error.

In still another implementation, if the time synchronization function network element determines, based on the fourth information, that the second access network device cannot provide a time synchronization service for the second terminal device because the timing state of the first user plane function network element is abnormal, the time synchronization function network element may delete a device-side TSN translator (device-side time sensitive networking translator, DS-TT) of the second terminal device from the gPTP instance.

In still another implementation, if the time synchronization of the first user plane function network element is severely abnormal, and the time synchronization function network element considers, based on the fourth information, that most or all of the second access network devices cannot provide a gPTP time synchronization service for a terminal device in a scenario in which the time synchronization state of the first user plane function network element is abnormal, the time synchronization function network element deletes the gPTP instance. Alternatively, the time synchronization function network element deactivates a network-side TSN translator (network time sensitive network translator, NW-TT) and a DS-TT function of the gPTP instance.

According to a third aspect, a time synchronization method is provided. The method may be performed by a first access network device, may be performed by a component (for example, a processor, a chip, or a chip system) of the first access network device, or may be implemented by a logical module or software that can implement all or some functions of the first access network device. The method includes: The first access network device sends first information, where the first information indicates information indicating that clock synchronization quality of the first access network device changes; the first access network device receives a second error, where the second error is determined based on the first information; the first access network device determines whether at least one time provision method supported by the first access network device meets a time provision requirement of the second error; and
when the first access network device determines that the at least one time provision method supported by the first access network device meets the time provision requirement of the second error, the first access network device determines a first time provision method from the at least one time provision method based on the second error, where the first time provision method is used by the first access network device to provide time for a first terminal device; or
when the first access network device determines that the at least one time provision method supported by the first access network device cannot meet the time provision requirement of the second error, the first access network device sends second information, where the second information indicates that the first access network device cannot provide time for the first terminal device.

Specifically, the first information may be timing state notification information. The first information may alternatively be information indicating that a timing synchronization state is abnormal. That a timing state is abnormal may also mean that a timing state changes, for example, degradation, improvement, or a fault of the timing state occurs.

Specifically, the at least one time provision method supported by the first access network device generates different time provision errors, and an appropriate time provision method may be selected based on a range of the second error to provide time.

According to the foregoing method, it can be determined whether a requirement for providing time for a terminal device can still be met when an anomaly occurs in a communication system, so that accuracy and stability of time synchronization are improved.

With reference to the third aspect, in some implementations of the third aspect, the first information further includes an identifier of the first access network device, and/or the first information includes a first error of the first access network device, and the first error is an error generated when a timing synchronization state of the first access network device is abnormal.

With reference to the third aspect, in some implementations of the third aspect, if the first information further includes a third error, that the first access network device receives a second error further includes: The second error is received when the second error is less than or equal to the second error, where the third error is an error generated due to a time provision capability of the first access network device.

Specifically, the error generated due to the time provision capability of the first access network device may be a minimum value of errors generated according to the at least one time provision method supported by the first access network device, or may be any one of errors generated according to the at least one time provision method supported by the first access network device. This is not limited in this application.

With reference to the third aspect, in some implementations of the third aspect, if the first information further includes a fourth error, and the fourth error is less than or equal to the second error, the method further includes: The first access network device receives a time provision indication, where the time provision indication indicates the first access network device to continue to provide time for the first terminal device; and the access network device determines the current time provision method as the first time provision method.

According to the foregoing method, when the time provision requirement is still met after the clock synchronization quality of the first access network device changes, the first access network device may continue to provide time for the first terminal device.

When the error generated according to the current time provision method of the first access network device is less than or equal to a re-determined second error, in other words, the error generated according to the current time provision method of the first access network device is within a range of the re-determined second error, the first access network device does not need to re-determine the time provision method, so that signaling overheads are reduced.

In another implementation, when the first information includes the fourth error, and the fourth error is less than or equal to the second error, the first access network device may not need to receive the second error. The first access network device may receive the time provision indication, where the time provision indication indicates the first access network device to continue to provide time for the first terminal device.

In an implementation, if the timing synchronization state of the first access network device is abnormal, the first access network device may determine, based on a currently allowed error of providing time for the first terminal device and an error (that is, the first error) generated when the timing synchronization state is abnormal, whether the first access network device still has a capability of providing time for the first terminal device. If determining that the first access network device cannot provide a time provision service, the first access network device sends, to the time synchronization function network element, a notification that the first access network device cannot provide time for the first terminal device. The time synchronization function network element sends a clock degradation notification of the first access network device to an application function AF network element after receiving the notification, or the time synchronization function network element deletes a device-side time sensitive networking translator DS-TT of the first terminal device in the generalized precision time protocol gPTP instance after receiving the notification.

According to a fourth aspect, a communication apparatus is provided. The apparatus may be a time synchronization function network element, may be a component (for example, a processor, a chip, or a chip system) of the time synchronization function network element, or may be a logical module or software that can implement all or some functions of the time synchronization function network element. The apparatus has functions of implementing the first aspect, the second aspect, and the various possible implementations of the first aspect and the second aspect. The functions may be implemented by hardware, or may be implemented by hardware executing corresponding software. The hardware or software includes one or more modules corresponding to the functions.

In a possible design, the apparatus includes an interface unit and a processing unit. The interface unit may be at least one of a transceiver, a receiver, and a transmitter. The interface unit may include a radio frequency circuit or an antenna. The processing unit may be a processor. Optionally, the apparatus may further include a storage unit, and the storage unit may be, for example, a memory. When the apparatus includes the storage unit, the storage unit is configured to store a program or instructions. The processing unit is connected to the storage unit, and the processing unit may execute the program or the instructions stored in the storage unit, or instructions from another source, so that the apparatus performs the communication method according to the first aspect, the second aspect, and the various possible implementations of the first aspect and the second aspect. In this design, the apparatus may be the time synchronization function network element.

In another possible design, when the apparatus is a chip, the chip includes an interface unit and a processing unit. The interface unit may be, for example, an input/output interface, a pin, or a circuit on the chip. The processing unit may be, for example, a processor. The processing unit may execute instructions, so that a chip in the time synchronization function network element performs the communication method according to the first aspect, the second aspect, and any possible implementations of the first aspect and the second aspect. Optionally, the processing unit may execute instructions in a storage unit, and the storage unit may be a storage module, for example, a register or a cache, in the chip. The storage unit may alternatively be located inside a communication device but outside the chip, for example, a read-only memory (read-only memory, ROM) or another type of static storage device that can store static information and instructions, or a random access memory (random access memory, RAM).

The processor mentioned anywhere above may be a general-purpose central processing unit (CPU), a microprocessor, an application-specific integrated circuit (application-specific integrated circuit, ASIC), or one or more integrated circuits configured to control program execution of the communication method according to the foregoing aspects.

According to a fifth aspect, a communication apparatus is provided. The apparatus may be a first access network device, may be a component (for example, a processor, a chip, or a chip system) of the first access network device, or may be a logical module or software that can implement all or some functions of the first access network device. The apparatus has functions of implementing the third aspect and the various possible implementations of the third aspect. The functions may be implemented by hardware, or may be implemented by hardware executing corresponding software. The hardware or software includes one or more modules corresponding to the functions.

In a possible design, the apparatus includes an interface unit and a processing unit. The interface unit may be at least one of a transceiver, a receiver, and a transmitter. The interface unit may include a radio frequency circuit or an antenna. The processing unit may be a processor. Optionally, the apparatus may further include a storage unit, and the storage unit may be, for example, a memory. When the apparatus includes the storage unit, the storage unit is configured to store a program or instructions. The processing unit is connected to the storage unit, and the processing unit may execute the program or the instructions stored in the storage unit, or instructions from another source, so that the apparatus performs the communication method according to the third aspect and the various possible implementations of the third aspect. In this design, the apparatus may be the first access network device.

In another possible design, when the apparatus is a chip, the chip includes an interface unit and a processing unit. The interface unit may be, for example, an input/output interface, a pin, or a circuit on the chip. The processing unit may be, for example, a processor. The processing unit may execute instructions, so that a chip in the first access network device performs the communication method according to the third aspect and any possible implementations of the third aspect. Optionally, the processing unit may execute instructions in a storage unit, and the storage unit may be a storage module, for example, a register or a cache, in the chip. The storage unit may alternatively be located inside a communication device but outside the chip, for example, a read-only memory (read-only memory, ROM) or another type of static storage device that can store static information and instructions, or a random access memory (random access memory, RAM).

The processor mentioned anywhere above may be a general-purpose central processing unit (CPU), a microprocessor, an application-specific integrated circuit (application-specific integrated circuit, ASIC), or one or more integrated circuits configured to control program execution of the communication method according to the foregoing aspects.

According to a sixth aspect, a computer storage medium is provided. The computer storage medium stores program code. The program code indicates instructions for performing the method according to the first aspect, the second aspect, the third aspect, and any possible implementations of the first aspect, the second aspect, and the third aspect.

According to a seventh aspect, a computer program product including computer instructions or computer code is provided. When the computer program product runs on a computer, the computer is enabled to perform the method according to the first aspect, the second aspect, the third aspect, and any possible implementations of the first aspect, the second aspect, and the third aspect.

According to an eighth aspect, a communication system is provided. The communication system includes an apparatus that has functions of implementing the method and various possible designs of the first aspect, an apparatus that has functions of implementing the method and various possible designs of the second aspect, and an apparatus that has functions of implementing the method and various possible designs of the third aspect. An apparatus that has the functions of implementing the method according to the first aspect and the second aspect and the functions of the possible designs in the first aspect and the second aspect may be a time synchronization function network element, and an apparatus that has the functions of implementing the functions in the third aspect and the possible designs in the third aspect may be a first access network device.

Specifically, for beneficial effects of other aspects, refer to the beneficial effects described in the first aspect, the second aspect, and the third aspect.

Based on the foregoing technical solution, when a timing synchronization state of a node in a communication system is abnormal, a time provision error used by an access network device to determine a time provision method is recalculated, so that it can be determined whether a requirement for providing time for a terminal device can still be met when an anomaly occurs in the communication system, thereby improving accuracy and stability of time synchronization .

### BRIEF DESCRIPTION OF DRAWINGS

FIG. 1 shows an example of a communication system architecture applicable to this application;
FIG. 2 is a diagram of a service-oriented architecture applicable to this application;
FIG. 3 is a diagram of a combination of a communication system and a TSN system according to this application;
FIG. 4 is a schematic flowchart of an implementation of a time synchronization method according to this application;
FIG. 5 is a schematic flowchart of an implementation of another time synchronization method according to this application;
FIG. 6 is a schematic flowchart of an implementation of still another time synchronization method according to this application;
FIG. 7 is a block diagram of an information sending apparatus 100 according to this application; and
FIG. 8 is a block diagram of an information receiving apparatus 100 according to this application.

### DESCRIPTION OF EMBODIMENTS

The following describes technical solutions of this application with reference to accompanying drawings.

The technical solutions in embodiments of this application may be applied to various communication systems, such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system, a new radio (new radio, NR) system, or a future communication system.

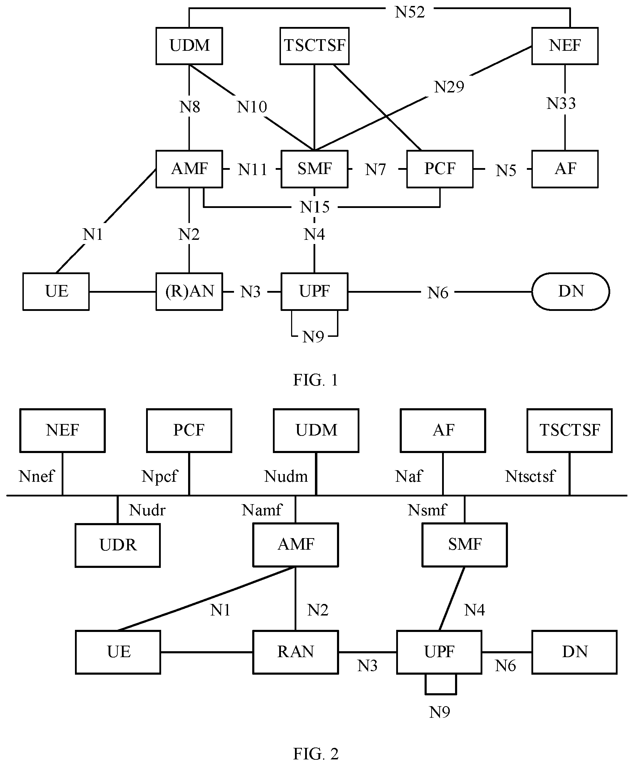

FIG. 1 shows an example of a communication system architecture applicable to an embodiment of this application. Functions of a terminal device and network entities are described below.

The terminal device may be referred to as a terminal (terminal), a terminal device unit (subscriber unit), a terminal device station, a terminal device agent, a terminal device apparatus, an access terminal, a terminal in V2X communication, a subscriber unit, user equipment (user equipment, UE), a subscriber station, a mobile station (mobile station, MS), a remote station, a remote terminal, a mobile device, a user terminal, a wireless communication device, a user agent, or a user apparatus.

The terminal device in embodiments of this application may alternatively be a mobile phone (mobile phone), a tablet computer (pad), a computer with a wireless transceiver function, a holographic projector, a video player, a virtual reality (virtual reality, VR) terminal, an augmented reality (augmented reality, AR) terminal, a wireless terminal in industrial control (industrial control), a tactile terminal device, a vehicle-mounted terminal device, a road side unit (road side unit, RSU), a wireless terminal in self-driving (self-driving), a communication terminal in an unmanned aerial vehicle, a wireless terminal in telemedicine (remote medical), a wireless terminal in a smart grid (smart grid), a wireless terminal in transportation safety (transportation safety), a wireless terminal in transportation safety, a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device, or another processing device connected to a wireless modem, a vehicle-mounted device, a wearable device, a terminal in a 5G network, a terminal in a future evolved network, or the like.

The wearable device may also be referred to as a wearable intelligent device, and is a collective term of wearable devices such as a head-mounted display, XR glasses, gloves, watches, clothes, and shoes, that are intelligently designed and developed for daily wear by using a wearable technology. The wearable device is a portable device that can be directly worn on a body or integrated into clothes or an accessory of a user. The wearable device is not only a hardware device, but also implements a powerful function through software support, data exchange, and cloud interaction. In a broad sense, the wearable intelligent device includes full-featured and large-size devices that can implement all or some of functions without depending on smartphones, for example, smart watches or smart glasses, and include devices that are dedicated to one type of application function and that need to be used together with other devices such as smartphones, for example, various smart bands or smart jewelry for monitoring physical signs.

A radio access network (radio access network, RAN) device is a network including a plurality of 5G-RAN nodes, and implements functions of a radio physical layer, resource scheduling and radio resource management, quality of service management, data compression and encryption, radio access control, and mobility management. A 5G-RAN is connected to a user plane function (user plane function, UPF) network element via a user plane interface N3, to transmit data of a terminal device. The 5G-RAN establishes a control plane signaling connection to an access and mobility management function (access and mobility management function, AMF) network element via a control plane interface N2, to implement functions such as radio access bearer control. The RAN may be any device having a wireless transceiver function, and includes but is not limited to a 5G NodeB (5G node base, gNB), an evolved NodeB (evolved NodeB, eNB), a wireless access point (wireless access point, Wi-Fi AP), a world interoperability for microwave access base station (world interoperability for microwave access base station, WiMAX BS), a transmission reception point (transmission reception point, TRP), a wireless relay node, a wireless backhaul node, and the like.

An access network device in embodiments of this application may alternatively be a device configured to communicate with the terminal device. The access network device may be a base transceiver station (base transceiver station, BTS) in a global system for mobile communications (global system for mobile communications, GSM) or code division multiple access (code division multiple access, CDMA), may be a NodeB (NodeB, NB) in a wideband code division multiple access (wideband code division multiple access, WCDMA) system, may be an evolved NodeB (evolved NodeB, eNB) in an LTE system, or may be a radio controller in a scenario of a cloud radio access network (cloud radio access network, CRAN). Alternatively, the access network device may be a relay station, an access point, a vehicle-mounted device, a wearable device, an access network device in a future 5G network, an access network device in a future evolved PLMN network, or the like. This is not limited in embodiments of this application.

In NR, functions of a base station are separated into two parts, and this is referred to as central unit (central unit, CU)-distributed unit (distributed unit, DU) separation. From a perspective of a protocol stack, a CU includes an RRC layer and a PDCP layer of an LTE base station, and a DU includes a radio link control (radio link control, RLC) layer, a media access control (media access control, MAC) layer, and a physical (physical, PHY) layer of the LTE base station. In common 5G base station deployment, the CU and the DU may be physically connected through an optical fiber, and logically there is a specially defined F1 interface used for communication between the CU and the DU. From a perspective of a function, the CU is mainly responsible for radio resource control and configuration, inter-cell mobility management, bearer management, and the like. The DU is mainly responsible for scheduling and physical signal generation and sending.

The base station may be a macro base station, a micro base station, a pico base station, a small cell, a relay station, a balloon station, or the like.

An access and mobility management function (access and mobility management function, AMF) belongs to a core network element, and is mainly responsible for signaling processing, for example, functions such as access control, mobility management, attachment and detachment, and gateway selection. When providing a service for a session of a terminal device, the AMF network element provides a control plane storage resource for the session, to store a session identifier and an identifier of a session management function (session management function, SMF) network element associated with the session identifier. In addition, the AMF network element is further responsible for transferring a user policy between the terminal device and a policy control function (policy control function, PCF).

An SMF is mainly responsible for a control plane function for session management of a terminal device, including selection and redirection of a user plane function (user plane function, UPF) network element, internet protocol (internet protocol, IP) address allocation, bearer establishment, modification, and release, quality of service (quality of service, QoS) control, session QoS management, obtaining of a policy and charging control (policy and charging control, PCC) policy (from a PCF), and the like.

A UPF network element is used as an anchor point of a protocol data unit (protocol data unit, PDU) session connection, is responsible for data packet filtering, data transmission/forwarding, rate control, charging information generation, and the like for a terminal device, and provides a connection to a data network (data network, DN).

A DN indicates a specific data service network to which a terminal device accesses. The DN is responsible for providing carrier services, internet access, or third-party services. The DN includes a server, and the server may implement video source encoding, rendering, and the like. A typical DN includes an internet network, an IP multimedia service (IP multimedia service, IMS) network, and the like. The DN is identified by a data network name (data network name, DNN) in a 5G network.

A unified data management (unified data management, UDM) network element is mainly configured to manage and control user data, for example, manage subscription information, including obtaining subscription information from a unified data repository (unified data repository, UDR) and providing the subscription information for another network element (for example, an AMF); generating an authentication credential of the third generation partnership project (third generation partnership project, 3GPP) for a terminal device; registering and maintaining a network element currently serving the terminal device, for example, an AMF currently serving the terminal device (namely, a serving AMF); and being responsible for notifying a corresponding network element when subscription data is modified.

A network exposure function (network exposure function, NEF) network element exposes services and capabilities of a 3GPP network function to an application function (application function, AF), and also enables the AF to provide information for the 3GPP network function.

An AF interacts with a core network element to provide some services, for example, interacts with a PCF to perform service policy control, interacts with an NEF to obtain some network capability information or provide some application information for a network, and provides some data network access point information for the PCF to generate routing information of a corresponding data service.

A PCF provides configuration policy information for a terminal device, provides policy information for a control plane network element (for example, an AMF or an SMF) of a network to manage and control the terminal device, and generates a terminal device access policy and a QoS flow control policy.

A time sensitive communication and time synchronization function (time sensitive communication and time synchronization function, TSCTSF) network element implements a capability of deterministic forwarding management in a 5G communication system.

The terminal device in this embodiment of this application is connected to the RAN device in a wireless manner, and the RAN device is connected to a 5G core network device in a wireless or wired manner. The 5G core network device and the RAN device may be different physical devices that are independent of each other, functions of the 5G core network device and logical functions of the RAN device may be integrated into a same physical device, or some functions of the 5G core network device and some functions of the RAN device may be integrated into one physical device. The terminal device may be located at a fixed position, or may be mobile.

The 5G core network device mainly includes the foregoing NEF network element, PCF network element, AF network element, AMF network element, SMF network element, UPF network element, TSCTSF network element, and the like.

It should be noted that the foregoing "network element" may also be referred to as an entity, a device, an apparatus, a module, or the like, and there is no particular limitation in this application herein. In addition, in this application, for ease of understanding and description, the description of the "network element" is omitted in some descriptions. For example, the TSCTSF network element is briefly referred to as a TSCTSF. In this case, the "TSCTSF" should be understood as a TSCTSF network element or a TSCTSF entity. Descriptions of same or similar cases are omitted below.

It should be noted that a name of each network element included in FIG. 1 is merely a name, and the name does not limit a function of the network element. In a 5G network and another future network, the foregoing network elements may alternatively have other names. This is not specifically limited in embodiments of this application. For example, in a 6G network, some or all of the foregoing network elements may still use terms in 5G, other names, and the like. A general description is provided herein. Details are not described again below.

It should be noted that the network elements in FIG. 1 do not necessarily exist simultaneously, and required network elements may be determined based on a requirement. A connection relationship between the network elements in FIG. 1 is not uniquely determined, and may be adjusted based on a requirement.

It may be understood that the foregoing network elements or functions may be network elements in a hardware device, may be software functions running on dedicated hardware, or may be virtualized functions instantiated on a platform (for example, a cloud platform).

FIG. 2 is a diagram of a service-oriented architecture. As shown in FIG. 2, Nnef, Nnrf, Nnssf, Naf, Npcf, Nudr, Nudm, Nausf, Namf, and Nsmf are service-oriented interfaces respectively provided by the foregoing NEF, NRF, NSSF, AF, PCF, UDR, UDM, AUSF, AMF, and SMF to invoke corresponding service-oriented operations. N1, N2, N3, N4, and N6 are interface sequence numbers.

In FIG. 1 and FIG. 2, names and functions of the interfaces between the network elements are as follows:
(1) N1 is an interface between the AMF and the terminal device, and may be configured to transfer a QoS control rule or the like to the terminal.
(2) N2 is an interface between the AMF and the RAN, and may be configured to transfer radio bearer control information or the like from a core network side to a RAN side.
(3) N3 is an interface between the RAN and the UPF, and is mainly configured to transfer uplink and downlink user plane data between the RAN and the UPF.
(4) N4 is an interface between the SMF and the UPF, and may be configured to transfer information between a control plane and a user plane, including delivering a forwarding rule, a QoS control rule, a traffic statistical rule, or the like from the control plane to the user plane, and reporting information about the user plane.
(5) N5 is an interface between the AF and the PCF, and may be configured to deliver an application service request and report a network event.
(6) N6 is an interface between the UPF and the DN, and is configured to transfer uplink and downlink user data flows between the UPF and the DN.
(7) N7 is an interface between the PCF and the SMF, and may be configured to deliver control policies at a protocol data unit (protocol data unit, PDU) session granularity and a service data flow granularity.
(8) N8 is an interface between the AMF and the UDM, and may be used by the AMF to obtain, from the UDM, access and mobility management-related subscription data and authentication data, used by the AMF to register current mobility management-related information of the terminal with the UDM, and the like.
(9) N9 is a user plane interface between UPFs, and is configured to transfer uplink and downlink user data flows between the UPFs.
(10) N10 is an interface between the SMF and the UDM, and may be used by the SMF to obtain session management-related subscription data from the UDM, used by the SMF to register current session-related information of the terminal with the UDM, and the like.
(11) N11 is an interface between the SMF and the AMF, and may be configured to transfer PDU session tunnel information between the RAN and the UPF, transfer a control message sent to the terminal, transfer radio resource control information sent to the RAN, and the like.
(12) N15 is an interface between the PCF and the AMF, and may be configured to deliver a terminal policy and an access control-related policy.
(13) Xn is an interface between two RANs, and may be used for signaling exchange between two base stations.
(14) Uu is an interface between the terminal device and the RAN.

The foregoing network elements or functions may be network elements in a hardware device, may be software functions running on dedicated hardware, or may be virtualized functions instantiated on a platform (for example, a cloud platform). Optionally, the foregoing network elements or functions may be implemented by one device, may be jointly implemented by a plurality of devices, or may be a function module in one device. This is not specifically limited in embodiments of this application.

It should be understood that FIG. 2 is merely a diagram of an example of a network service-oriented architecture, and a diagram of a network service-oriented architecture applicable to embodiments of this application is not limited thereto. Any network service-oriented architecture that can implement functions of the foregoing network elements is applicable to embodiments of this application.

For example, in some network architectures, network function entities such as an AMF, an SMF, a PCF, a TSCTSF, and a UDR are all referred to as network function (network function, NF) network elements. Alternatively, in some other network architectures, a set of network elements such as an AMF, an SMF, a PCF, a TSCTSF, and a UDM may be referred to as a control plane function (control Plane function, CPF) network element.

The following uses a network element in a 5G system (5G system, 5GS) as an example to describe specific solution details. It may be understood that, when this solution is applied to an LTE system, a 5G system, or a future communication system, each network element in the solution may be replaced with another network element having a corresponding function. This is not limited in this application.

It should be understood that FIG. 1 and FIG. 2 are merely examples of a network architecture, and a network architecture applicable to embodiments of this application is not limited thereto. Any network architecture that can implement functions of the foregoing network elements is applicable to embodiments of this application.

In this application, a 5G communication system is used as an example to describe embodiments of this application. However, the technical solutions of this application are not limited to the 5G system.

All tasks are based on a clock reference in fields such as communication and industrial control. Therefore, precise time synchronization is a basic standard. TSN is a mature standard defined by the institute of electrical and electronics engineers (institute of electrical and electronics engineers, IEEE) and widely used in the industry. The TSN can resolve problems of time synchronization and delay calculation in a network to ensure high consistency of task scheduling in the entire network. Many vertical industry users hope that access of the users to a TSN network can be implemented via a 5G network instead of in a wired manner. Therefore, when a user accesses the TSN network via a 5G system, an existing control function of the TSN network can be implemented via the TSN network, and various performance indicators of data transmission of the TSN network can be met via the 5G system.

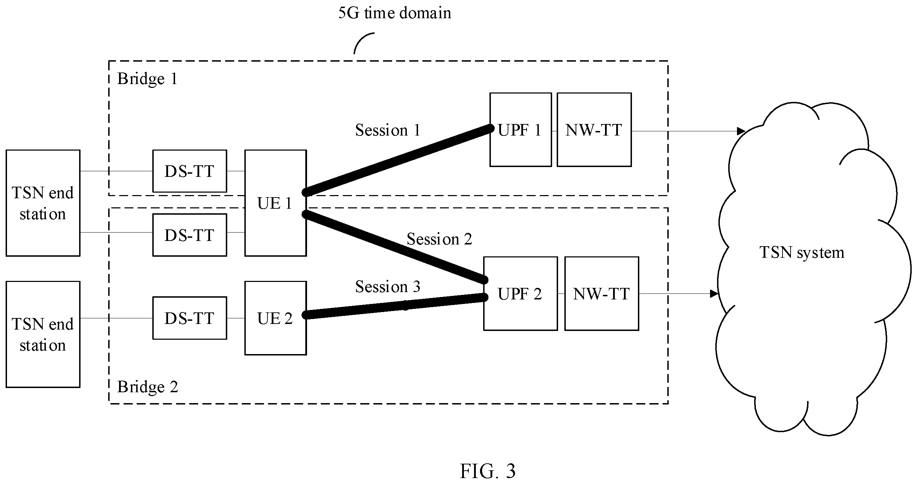

To support the TSN, the 5G system also needs to support a time synchronization function. As shown in FIG. 3, a network-side TSN translator (network time sensitive network translator, NW-TT) of the 5G system is an ingress interface to a TSN system, and is responsible for introducing a time synchronization packet of the TSN to the 5G network. The NW-TT needs to synchronously complete delay deviation measurement, frequency deviation measurement, and the like between the 5G system and the TSN. In addition, the NW-TT adds a timestamping (tse or tsi) of the 5G system to a synchronization clock packet. The NW-TT may be an interface of a UPF on a network side in the 5G system, or may be a function integrated into the UPF.

The device-side TSN translator (device-side time sensitive networking translator, DS-TT) of the 5G system is an outbound interface to the TSN system, and is responsible for outputting the TSN time synchronization packet to the TSN. The DS-TT needs to work with a TSN end station (end station) to complete delay deviation measurement and frequency deviation measurement between the 5G system and the TSN. In addition, the DS-TT adds an egress timestamping (tse) of the 5G system to the synchronization clock packet, and calculates an internal forwarding delay (residence time) of the 5G system. The DS-TT may be an interface of UE on a terminal device side in the 5G system, or may be a function integrated into the UE.

In conclusion, a time synchronization process in which the time synchronization packet in the TSN system passes through the 5G system is as follows: A TSN clock source (Greenwich mean, GM) of the TSN system sends a generalized precision time protocol (generalized precision time protocol, gPTP) packet to the 5G system, and clock information of the TSN system is carried in the gPTP packet. The packet is transferred from the NW-TT to the DS-TT through a data stream carried in a session (for example, a session 1, a session 2, and a session 3 shown in FIG. 3). The UE calculates a deviation between a 5G system clock and a TSN system clock based on clock stamp information in the gPTP packet, and finally obtains the clock information of the TSN system.

The 5G system may be considered as a bridge (bridge) of the TSN, or the 5G system may be considered as a precise time protocol (precision time protocol, PTP) node of the TSN. During calculation of the internal forwarding delay of the time synchronization packet in the 5G system by the DS-TT, the 5G system needs to work in one time domain (time domain) and have a same frequency.

The time domain of the TSN system may be a factory-defined time source, and does not need to be consistent with a global positioning system (global positioning system, GPS) or coordinated universal time (coordinated universal time, UTC).

It may be considered that each gPTP instance (instance) in the 5G system shown in FIG. 3 includes a plurality of terminal devices.

The technical solutions of this application may not only be applied to an independent 5G communication system, but also be applied to a combined system of the 5G communication system and another system, for example, a combination of the 5G system and time sensitive networking (time sensitive network, TSN) described above.

For the independent 5G system, a time synchronization method (or a time provision method) of the 5G system is broadcast by the RAN to the UE in an air interface frame alignment manner, and the UE can obtain accurate local 5G clock information through calculation. The UPF obtains the accurate local 5G clock information through calculation based on 5G clock information provided by the RAN or a transport network.

For the foregoing combined system of the 5G system and the TSN system, the TSN clock source sends the gPTP packet to each gPTP node in the TSN system, and the 5G system may also be considered as a gPTP node in the TSN system. In other words, to obtain accurate TSN clock information in the TSN system, precise time synchronization of the 5G system in the TSN system is definitely required.

When an anomaly occurs in the RAN, the UPF, or the like in the 5G system during time synchronization , there is no related solution for determining whether the 5G system can still meet a requirement for providing time for the UE when the anomaly occurs.

The anomaly that occurs in the RAN, the UPF, or the like during time synchronization may be degradation, improvement, a fault, or the like. A scenario in which the anomaly occurs is not limited in this application. To describe the technical solutions of this application more clearly, in this application, the degradation is used as an example for description. The degradation may be a clock delay of the RAN, the UPF, or the like.

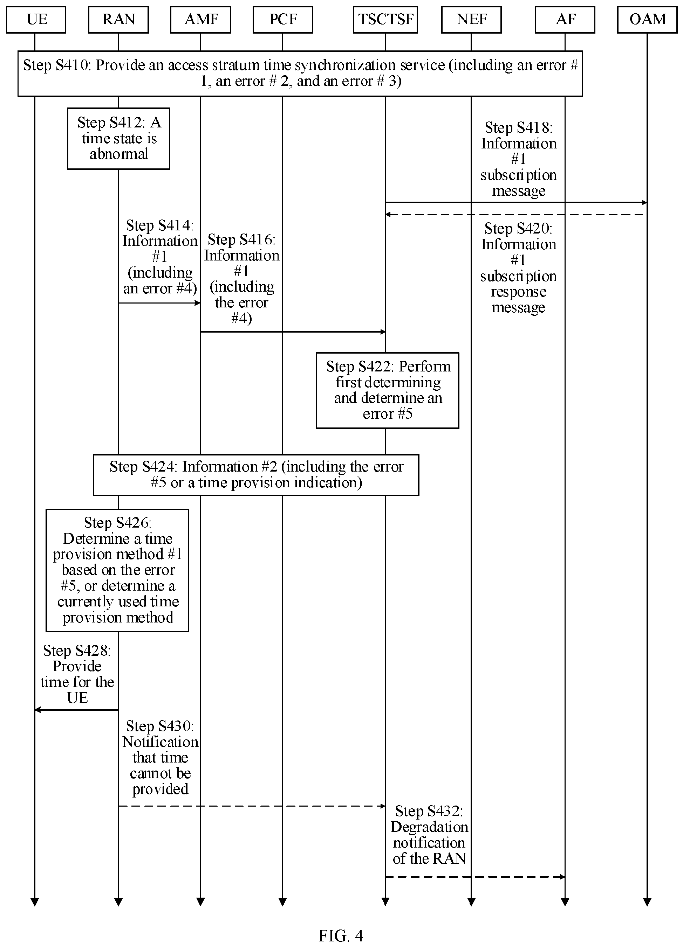

For an independent 5G network, this application provides a method for obtaining more accurate time synchronization , as shown in FIG. 4.

Step S410: The 5G system provides an access stratum time synchronization service for UE.

Specifically, an AF may send a time provision request message to an NEF, and the NEF further forwards the time provision request message to a TSCTSF. The time provision request message includes an identifier of the UE. Optionally, the time provision request may include a requirement (namely, an error #1 described below) of a time provision error budget (error budget) of the AF.

Specifically, the error #1 may be a requirement of the 5G system on a maximum upper limit of a time provision error of the UE.

If the time provision request message does not carry the error #1, the TSCTSF may use a pre-configured default value as the error #1. After obtaining the error #1, the TSCTSF removes a time provision error (namely, an error #2 described below) in a network side and a device side from the error #1 based on a time synchronization mode, to obtain a time provision error (namely, an error #3 described below) on a Uu air interface.

Specifically, the error #2 may be a preconfigured value or another transmitted value. This is not limited in this application.

The TSCTSF sends the determined error #3 to a RAN, and the RAN determines which time provision method is used to provide time for the UE.

Specifically, the UE may obtain a reference clock signal of the RAN according to a plurality of time provision methods such as a round trip time (round trip latency, RTT)-based time provision method and a timing advance (time advance, TA)-based time provision method. This is not limited in this application.

Step S412: A timing state of the RAN is abnormal.

Specifically, that a timing state of the RAN is abnormal may be that the timing state of the RAN changes. For example, degradation, improvement, or a fault of the timing state of the RAN occurs. For example, when a reference clock signal sent by a global navigation satellite system (global navigation satellite system, GNSS) to the RAN is blocked by an obstacle, a GNSS receive antenna on a RAN side does not receive the reference clock signal in a timely manner. Consequently, the timing state of the RAN changes.

In this embodiment of this application, the degradation of the timing state is used as an example. A case of the improvement of the timing state or the fault of the timing state is similar to a case of the degradation of the timing state.

Step S414: The RAN sends information #1 to an AMF via a next generation application protocol (next generation application protocol, NGAP) service, where the information #1 is for notifying that the timing state of the RAN is abnormal.

Specifically, the information #1 may be an example of first information.

Specifically, the information #1 may include information (clock quality information) indicating that clock quality of the RAN changes.

Optionally, the information #1 may further include an identifier of the RAN, an error #4, an error (namely, an example of a third error) generated due to a time provision capability of the RAN, a currently used time provision method of the RAN and an error (namely, an example of a fourth error) generated according to the currently used time provision method, a time provision error of at least one time provision method currently supported by the RAN, and the like. The error #4 is an error generated/caused when the timing state of the RAN is abnormal. In other words, the error #4 may be a range (uncertainty, or UTC traceability, or clock quality information) of an error added when the timing state of the RAN is abnormal. Specifically, the error #4 may be an example of a first error.

Specifically, the error generated due to the time provision capability of the RAN may be a minimum value of errors generated according to at least one time provision method supported by the RAN, or may be any one of the errors generated according to the at least one time provision method supported by the RAN. This is not limited in this application.

Step S416: The AMF forwards the information #1 to the TSCTSF.

Specifically, the AMF may forward the information #1 to the TSCTSF via an SMF, or the AMF may forward the information #1 to the TSCTSF via a PCF, or the AMF may forward the information #1 to the TSCTSF via the SMF and the PCF. This is not limited in this application.

Step S418: The TSCTSF may subscribe to the information #1 from an operation, administration, and maintenance (operation, administration, and maintenance, OAM) network element in advance, and when the timing state of the RAN is abnormal, the OAM reports the information #1 to the TSCTSF.

Optionally, in step S420, if the timing state of the RAN is abnormal and the RAN does not report the information #1 to the TSCTSF, the OAM sends an information #1 subscription response message to the TSCTSF, where the information #1 subscription response message includes the information #1.

Step S422: The TSCTSF performs first determining, where the first determining is used by the TSCTSF to determine whether the RAN may further provide an access stratum time synchronization service for the UE in a degradation scenario.

Specifically, the first determining may have the following results:
First manner: Specifically, the TSCTSF recalculates the error #3, determines the redetermined error #3 as an error #5, and sends the error #5 to the RAN.

Specifically, the error #5 may be an example of a second error.

Second manner: Optionally, if the information #1 further includes the error (namely, an example of the third error) generated due to the time provision capability of the RAN, the TSCTSF further needs to determine whether the error #5 falls within a range of the error generated due to the time provision capability of the RAN. If the error #5 falls within the range of the error generated due to the time service capability of the RAN, the TSCTSF sends the error #5 to the RAN.

For example, if the error #3 is 250 nanoseconds (ns), an optimal time provision error (namely, the error generated due to the time provision capability of the RAN) that may be provided by the RAN is 100 ns, and the error #4 is 100 ns, the TSCTSF may determine that the error #5 is Error #3 - Error #4 = 150 ns, and the optimal time provision error that may be provided by the RAN is 100 ns < 150 ns, so that the TSCTSF may determine that the RAN capability may further provide the access stratum time synchronization service for the UE in the degradation scenario.

Third manner: Optionally, if the information #1 further includes the error (namely, an example of the third error) generated due to the time provision capability of the RAN, the TSCTSF further needs to determine whether the error #5 falls within a range of the error generated due to the time provision capability of the RAN. If the error #5 does not fall within the range of the error generated due to the time service capability of the RAN, the TSCTSF does not send the error #5 to the RAN.

Fourth manner: Optionally, if the information #1 further includes the currently used time provision method of the RAN and the error (namely, an example of the fourth error) generated according to the currently used time provision method, the TSCTSF further needs to determine whether the error #5 falls within a range of the currently used time provision method of the RAN and the error generated according to the currently used time provision method. If the error #5 falls within the range of the currently used time provision method of the RAN and the error generated according to the currently used time provision method, the TSCTSF does not send the error #5 to the RAN, but indicates the RAN to use the current time provision method to provide time for the UE.

Fifth manner: Optionally, if the information #1 further includes the currently used time provision method of the RAN and the error (namely, an example of the fourth error) generated according to the currently used time provision method, the TSCTSF further needs to determine whether the error #5 falls within a range of the currently used time provision method of the RAN and the error generated according to the currently used time provision method. If the error #5 does not fall within the range of the currently used time provision method of the RAN and the error generated according to the currently used time provision method, the TSCTSF sends the error #5 to the RAN, and the RAN re-determines a time provision method.

Sixth manner: Optionally, if the information #1 includes the error (namely, an example of the third error) generated due to the time provision capability of the RAN, the currently used time provision method of the RAN, and the error (namely, an example of the fourth error) generated according to the currently used time provision method, the TSCTSF may perform determining in any one of the foregoing second, third, fourth, and fifth manners.

Step S424: If the TSCTSF needs to send the recalculated error #5 or a time provision indication to the RAN, the TSCTSF sends information #2 to the RAN, where the information #2 includes the error #5 or the time provision indication that needs to be sent to the RAN.

Specifically, the information #2 sent by the TSCTSF to the RAN needs to be forwarded by the SMF and the AMF, or the information #2 sent by the TSCTSF to the RAN needs to be forwarded by the PCF and the AMF, or the information #2 sent by the TSCTSF to the RAN needs to be forwarded by the PCF, the SMF, and the AMF. This is not limited in this application.

Step S426: After receiving the information #2, the RAN may determine, based on the information #2, a time provision method #1 (namely, an example of a first time provision method) that meets a requirement of the error #5, or may select the currently used time provision method based on the time provision indication.

Step S428: The RAN provides time for the UE based on the determined time provision method #1, or the RAN continues to provide time for the UE by using the currently used time provision method.

Optionally, in step S430, if the RAN cannot determine, based on the information #2, the time provision method #1 that meets the requirement of the error #5, or the RAN cannot provide the time provision method #1 that meets the requirement of the error #5, the RAN sends, to the TSCTSF, a notification (namely, an example of second information) that the RAN cannot provide time.

Optionally, in step S432, if the TSCTSF considers, based on a result of the first determining, that the RAN cannot provide the access stratum time synchronization service for the UE in the degradation scenario, the TSCTSF directly sends a degradation notification of the RAN to the AF.

Specifically, step S432 may be performed after step S422 and before step S424. When step S432 is performed, step S424 to step S430 may not need to be performed.

According to the technical solution in the foregoing embodiment, in a scenario in which the timing state of the RAN with the access stratum time synchronization is abnormal, a method for providing time for the UE by the RAN may be updated in a timely manner and flexibly adjusted, thereby improving accuracy of time synchronization.

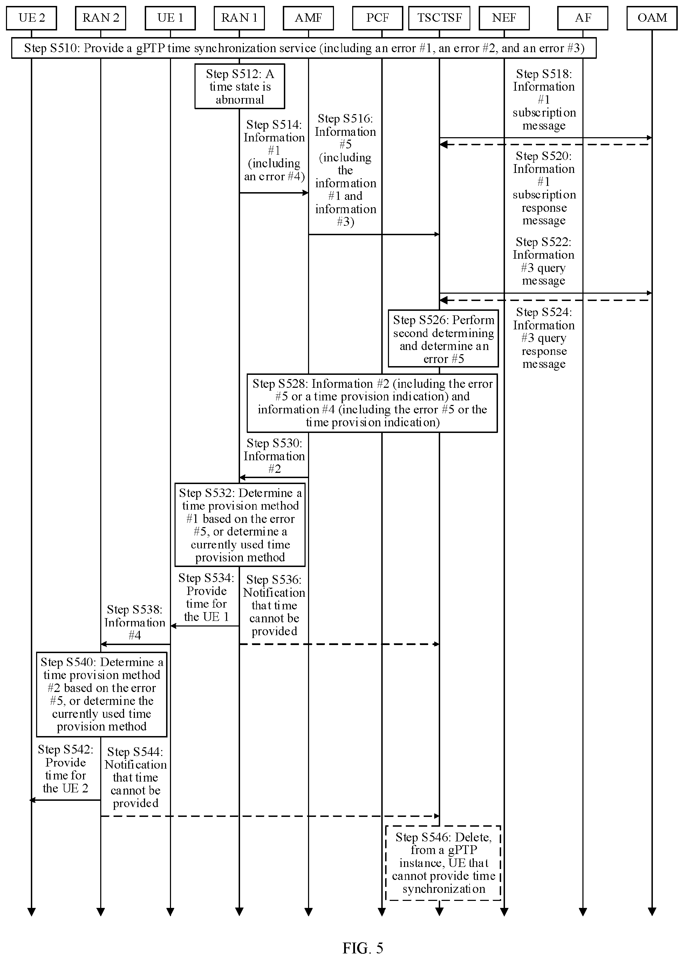

The foregoing describes a scenario in which one RAN in the 5G system provides time for the UE. The following uses a system combining the 5G system and a TSN system as an example to describe a technical solution in a scenario in which degradation of a plurality of RANs occurs in gPTP node time synchronization, as shown in FIG. 5.

One gPTP instance may include a plurality of RANs or may include a plurality of terminal devices. In this embodiment, the technical solution of this embodiment is described in detail by using a case in which the gPTP instance includes two RANs (for example, a RAN 1 and a RAN 2).

Step S510: The 5G system provides a gPTP time synchronization service for UE.

For a specific synchronization method, refer to the descriptions of the access stratum time synchronization service in step S410. Details are not described herein again.

For step S512 and step S514, refer to step S412 and step S414. Details are not described herein again.

Step S516: When receiving information #1 of the RAN 1, if it may be determined that UE 2 and UE 1 for which the RAN 2 and the RAN 1 provide time belong to a same gPTP instance, an AMF may also send information #3 to a TSCTSF when forwarding the information #1 to the TSCTSF.

Specifically, the information #1 and the information #3 may be carried in a same piece of information #5 for sending.

Specifically, the information #3 may include an identifier of the RAN 2, an error generated due to a time provision capability of the RAN 2, a currently used time provision method of the RAN 2, an error generated according to the currently used time provision method, a time provision error of at least one time provision method currently supported by the RAN 2, and the like.

For descriptions of step S518 and step S520, refer to step S418 and step S420. Details are not described herein again.

Step S522: The TSCTSF may subscribe to the information #3 from an operation, administration, and maintenance (operation, administration, and maintenance, OAM) network element in advance.

Specifically, the information #3 may indicate time provision information of all RANs that participate in providing time for the UE and that are in a same gPTP instance.

Optionally, in step S524, after receiving the information #1 of the RAN 1, the TSCTSF may determine whether a RAN in the same gPTP instance as the RAN 1 participates in providing time for the UE, and if it is found that the RAN 2 also participates in time provision, the TSCTSF obtains the information #3 of the RAN 2 from the OAM network element.

Step S526: After receiving the information #5, the TSCTSF performs second determining, where the second determining is used by the TSCTSF to determine whether the RAN 1 may further provide a gPTP time synchronization service for the UE 1 in a degradation scenario.

Specifically, for determining on the RAN 1, refer to the first determining in step S422.

Specifically, for determining on the RAN 2, refer to the determining processes of the second manner, the third manner, the fourth manner, the fifth manner, and the sixth manner of the first determining in step S422.

Step S528: If the TSCTSF needs to send a recalculated error #5 or a time provision indication to the RAN 1, the TSCTSF sends information #2 to the AMF, where the information #2 includes the error #5 or the time provision indication that needs to be sent to the RAN 1. If the TSCTSF needs to send the recalculated error #5 or the time provision indication to the RAN 2, the TSCTSF sends information #4 to the AMF, where the information #4 includes the error #5 or the time provision indication that needs to be sent to the RAN 2.

Step S530: The AMF sends the information #2 to the RAN 1.

For step S532 to step S536, refer to step S426 to step S430. Details are not described herein again.

Step S538: The AMF sends the information #4 to the RAN 2.

For step S540 to step S544, refer to step S426 to step S430. Details are not described herein again.

Optionally, in step S546, if the TSCTSF considers, based on a result of the second determining, that the RAN 1 cannot provide the gPTP time synchronization service for the UE 1 in the degradation scenario, the TSCTSF deletes a DS-TT of the UE 1 from the gPTP instance.

Specifically, step S546 may be performed after step S526 and before step S528. When step S546 is performed, step S530 to step S536 may not need to be performed.

According to the technical solution in the foregoing embodiment, when degradation of the RAN occurs, a time provision error budget of another RAN that participates in providing time for the UE and that is in the gPTP instance is also synchronously updated, so that not only timely update of time synchronization information can be ensured, but also clock information of the terminal device for which time is provided and that is in the gPTP instance can be ensured to be consistent.

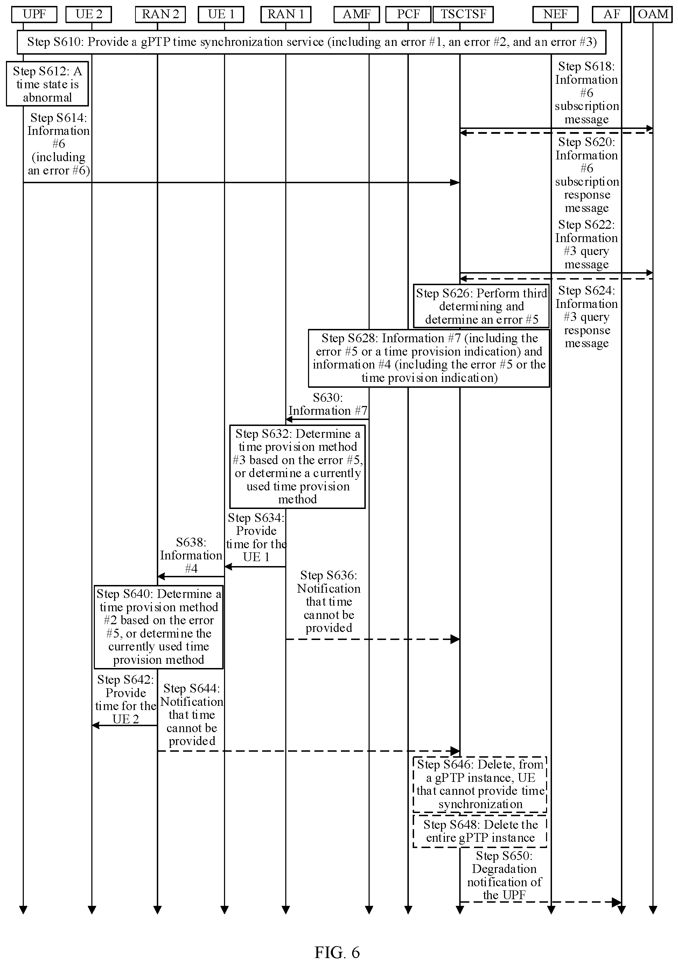

The foregoing describes a technical solution in a scenario in which degradation of a plurality of RANs occurs in gPTP node time synchronization, and the following describes a technical solution in a UPF degradation scenario in gPTP node time synchronization, as shown in FIG. 6.

Step S610: A 5G system provides a gPTP time synchronization service for UE.

For a specific synchronization method, refer to the descriptions of the access stratum time synchronization service in step S410. Details are not described herein again.

Step S612: A timing state of a UPF is abnormal.

Specifically, that a timing state of a UPF is abnormal may be that the timing state of the UPF changes. For example, degradation, improvement, or a fault of the timing state of the UPF occurs.

In this embodiment of this application, the degradation of the timing state is used as an example. A case of the improvement of the timing state or the fault of the timing state is similar to a case of the degradation of the timing state.

Step S614: The UPF sends information #6 to a TSCTSF, where the information #6 is for notifying that the timing state of the UPF is abnormal.

Specifically, the information #6 may be an example of first information.

Specifically, the information #6 may include information (clock quality information) indicating that clock synchronization quality of the UPF changes.

Optionally, the information #6 may further include an identifier of the UPF and an error #6. The error #6 is an error generated/caused when the timing state of the UPF is abnormal. Alternatively, the error #6 may be a range (uncertainty or UTC traceability) of an error added when the timing state of the UPF is abnormal. Specifically, the error #6 may be an example of a first error.

Step S618: The TSCTSF may subscribe to the information #6 from an operation, administration, and maintenance (operation, administration, and maintenance, OAM) network element in advance, and when the timing state of the UPF is abnormal, the OAM reports the information #6 to the TSCTSF.

Optionally, in step S620, if the timing state of the UPF is abnormal and the UPF does not report the information #6 to the TSCTSF, the OAM sends an information #6 subscription response message to the TSCTSF, where the information #6 subscription response message includes the information #6.

Step S622: The TSCTSF may subscribe to information #3 from an operation, administration, and maintenance (operation, administration, and maintenance, OAM) network element in advance.

Specifically, the information #3 may indicate time provision information of all RANs that participate in providing time for the UE and that are in a same gPTP instance.

Optionally, in step S624, after receiving the information #6 of the UPF, the TSCTSF may determine time provision information of all RANs that participate in time provision and that are in a gPTP instance of the UPF on which degradation is performed. For example, in the gPTP instance, a RAN 1 and a RAN 2 participate in time provision. The TSCTSF obtains the information #3 of the RAN 1 and the RAN 2 from the OAM network element.

Step S626: After receiving the information #6, the TSCTSF performs third determining, where the third determining is used by the TSCTSF to determine whether the RAN 1 and the RAN 2 may further provide gPTP time synchronization services for the UE 1 and the UE 2 in the degradation scenario.

Specifically, the third determining on the RAN 1 may have the following results:
First manner: Specifically, the TSCTSF recalculates the foregoing error #3, determines the redetermined error #3 as an error #5, and sends the error #5 to the RAN 1.

Specifically, the error #5 may be an example of a second error.

For another result of the determining on the RAN 1, refer to the determining processes of the second manner, the third manner, the fourth manner, the fifth manner, and the sixth manner of the first determining in step S422.

Specifically, the third determining on the RAN 2 may have the following results:
First manner: Specifically, the TSCTSF recalculates the foregoing error #3, determines the redetermined error #3 as an error #5, and sends the error #5 to the RAN 2.

Specifically, the error #5 may be an example of a second error.

For another result of the determining on the RAN 2, refer to the determining processes of the second manner, the third manner, the fourth manner, the fifth manner, and the sixth manner of the first determining in step S422.

Step S628: If the TSCTSF needs to send the recalculated error #5 or a time provision indication to the RAN 1, the TSCTSF sends information #7 to the AMF, where the information #7 includes the error #5 or the time provision indication that needs to be sent to the RAN 1. If the TSCTSF needs to send the recalculated error #5 or the time provision indication to the RAN 2, the TSCTSF sends information #4 to the AMF, where the information #4 includes the error #5 or the time provision indication that needs to be sent to the RAN 2.

Step S630: The AMF sends the information #7 to the RAN 1.

For step S632 to step S636, refer to step S426 to step S430. Details are not described herein again.

Step S638: The AMF sends the information #4 to the RAN 2.

For step S640 to step S644, refer to step S426 to step S430. Details are not described herein again.

Optionally, in step S646, if the TSCTSF considers, based on a result of the third determining, that the RAN 1 cannot provide the gPTP time synchronization service for the UE 1 in a UPF degradation scenario, the TSCTSF deletes a DS-TT of the UE 1 from the gPTP instance. Alternatively, if the TSCTSF considers, based on the result of the third determining, that the RAN 2 cannot provide the gPTP time synchronization service for the UE 2 in the UPF degradation scenario, the TSCTSF deletes a DS-TT of the UE 2 from the gPTP instance.

Specifically, step S646 may be performed after step S626 and before step S628. When step S646 is performed, step S630 to step S636 or step S638 to step S644 may not need to be performed.

Optionally, in step S648, if a degradation degree of the UPF is severe, and the TSCTSF considers, based on the result of the third determining, that most or all RANs cannot provide gPTP time synchronization services for the UE in the UPF degradation scenario, the TSCTSF deletes the gPTP instance. Alternatively, the TSCTSF deactivates functions of an NW-TT and the DS-TT.

Optionally, in step S650, if the TSCTSF deletes the gPTP instance, the TSCTSF sends a degradation notification of the UPF to the AF.

According to the technical solution in the foregoing embodiment, when degradation of the UPF in the gPTP instance occurs, a time provision error budget of another RAN that participates in time provision and that is in the gPTP instance is also synchronously updated, so that not only timely update of time synchronization information can be ensured, but also clock information of a terminal device for which time is provided and that is in the gPTP instance can be ensured to be consistent.

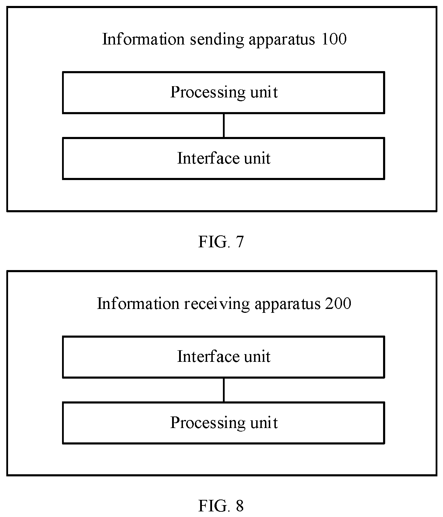

FIG. 7 is a block diagram of an information sending apparatus 100 according to an embodiment of this application. The information sending apparatus 100 may correspond to (for example, may be configured or may be) the UPF, the RAN 1, the RAN 2, the AMF, the PCF, the TSCTSF, the NEF, the AF, or the OAM described in embodiments of FIG. 4, FIG. 5, and FIG. 6. In addition, modules or units in the information sending apparatus 100 are respectively configured to perform actions or processing processes performed by the UPF, the RAN 1, the RAN 2, the AMF, the PCF, the TSCTSF, the NEF, the AF, and the OAM described in embodiments of FIG. 4, FIG. 5, and FIG. 6. To avoid repetition, detailed descriptions are omitted.

In this embodiment of this application, the apparatus 100 may be the UPF, the RAN 1, the RAN 2, the AMF, the PCF, the TSCTSF, the NEF, the AF, or the OAM described in embodiments of FIG. 4, FIG. 5, and FIG. 6. In this case, the apparatus 100 may include a processor and a transceiver, and the processor is communicatively connected to the transceiver.

Optionally, the apparatus further includes a memory. The memory is communicatively connected to the processor. Optionally, the processor, the memory, and the transceiver may be communicatively connected to each other. The memory may be configured to store a program or instructions. The processor is configured to execute the program or the instructions stored in the memory, to control the transceiver to send information or a signal.

In this case, an interface unit in the apparatus 100 shown in FIG. 7 may correspond to the transceiver, and a processing unit in the apparatus 100 shown in FIG. 7 may correspond to the processor.

In this embodiment of this application, the apparatus 100 may be a chip (or a chip system) installed in the UPF, the RAN 1, the RAN 2, the AMF, the PCF, the TSCTSF, the NEF, the AF, or the OAM described in embodiments of FIG. 4, FIG. 5, and FIG. 6. In this case, the apparatus 100 may include a processor and an input/output interface. The processor may be communicatively connected to a transceiver of the UPF, the RAN 1, the RAN 2, the AMF, the PCF, the TSCTSF, the NEF, the AF, or the OAM described in embodiments of FIG. 4, FIG. 5, and FIG. 6 through the input/output interface. Optionally, the apparatus further includes a memory, and the memory is communicatively connected to the processor. Optionally, the processor, the memory, and the transceiver may be communicatively connected to each other. The memory may be configured to store a program or instructions. The processor is configured to execute the program or the instructions stored in the memory, to control the transceiver to send information or a signal.

In this case, the interface unit in the apparatus 100 shown in FIG. 7 may correspond to the input/output interface, and the processing unit in the apparatus 100 shown in FIG. 7 may correspond to the processor.

FIG. 8 is a block diagram of an information receiving apparatus 200 according to an embodiment of this application. The information receiving apparatus 200 may correspond to (for example, may be configured to implement) the UPF, the UE 1, the UE 2, the RAN 1, the RAN 2, AMF, PCF, TSCTSF, NEF, AF, or the OAM described in embodiments of FIG. 4, FIG. 5, and FIG. 6. In addition, modules or units in the information receiving apparatus 200 are respectively configured to perform actions or processing processes performed by the UPF, the UE 1, the UE 2, the RAN 1, the RAN 2, the AMF, the PCF, the TSCTSF, the NEF, the AF, and the OAM described in embodiments of FIG. 4, FIG. 5, and FIG. 6. To avoid repetition, detailed descriptions are omitted.

In this embodiment of this application, the apparatus 200 may be the UPF, the UE 1, the UE 2, the RAN 1, the RAN 2, the AMF, the PCF, the TSCTSF, the NEF, the AF, or the OAM described in embodiments of FIG. 4, FIG. 5, and FIG. 6. In this case, the apparatus 200 may include a processor and a transceiver. The processor is communicatively connected to the transceiver. Optionally, the apparatus further includes a memory, and the memory is communicatively connected to the processor. Optionally, the processor, the memory, and the transceiver may be communicatively connected to each other. The memory may be configured to store a program or instructions. The processor is configured to execute the program or the instructions stored in the memory, to control the transceiver to receive information or a signal.

In this case, an interface unit in the apparatus 200 shown in FIG. 8 may correspond to the transceiver, and a processing unit in the apparatus 200 shown in FIG. 8 may correspond to the processor.

In this embodiment of this application, the apparatus 200 may be a chip (or a chip system) installed in the UPF, the UE 1, the UE 2, the RAN 1, the RAN 2, the AMF, the PCF, the TSCTSF, the NEF, the AF, or the OAM described in embodiments of FIG. 4, FIG. 5, and FIG. 6. In this case, the apparatus 200 may include a processor and an input/output interface. The processor may be communicatively connected to a transceiver of the UPF, the UE 1, the UE 2, the RAN 1, the RAN 2, the AMF, the PCF, the TSCTSF, the NEF, the AF, or the OAM described in embodiments of FIG. 4, FIG. 5, and FIG. 6 through the input/output interface. Optionally, the apparatus further includes a memory, and the memory is communicatively connected to the processor. Optionally, the processor, the memory, and the transceiver may be communicatively connected to each other. The memory may be configured to store a program or instructions. The processor is configured to execute the program or the instructions stored in the memory, to control the transceiver to receive information or a signal.

In this case, the interface unit in the apparatus 200 shown in FIG. 8 may correspond to an input interface, and the processing unit in the apparatus 200 shown in FIG. 8 may correspond to the processor.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for the particular applications, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate components may or may not be physically separate, and components displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. A computer software product is stored in a storage medium, and includes several instructions for indicating a computer device (which may be a personal computer, a server, a network device, or the like) to perform all or a part of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A time synchronization method, comprising:
receiving, by a time synchronization function network element, first information of a first device, wherein the first information indicates information indicating that clock synchronization quality of a first access network device changes; and
determining, by the time synchronization function network element, a first error of the first access network device based on the first information, and determining whether the first error meets a total time provision error configured by a network for a first service, wherein the total time provision error is used by the first access network device to provide time for a first terminal device, and the first error is an error generated when clock quality of the first access network device changes.

2. The method according to claim 1, wherein when the first error does not meet the total time provision error configured by the network for the first service, the method further comprises:
determining, by the time synchronization function network element, a second error of the first access network device based on the first information, wherein the second error is used by the first access network device to provide time for the first terminal device; and
sending, by the time synchronization function network element, the second error to the first access network device.

3. The method according to claim 1 or 2, wherein the first information further comprises an identifier of the first access network device.

4. The method according to any one of claims 1 to 3, wherein the first device comprises the first access network device, a mobility management network element AMF, or an operation, administration, and maintenance OAM device.

5. The method according to any one of claims 2 to 4, wherein if the first information further comprises a third error, the sending, by the time synchronization function network element, the second error to the first access network device further comprises: sending, by the time synchronization function network element, the second error when determining that the third error is less than or equal to the second error, wherein the third error is an error generated due to a time provision capability of the first access network device.

6. The method according to any one of claims 1 to 5, wherein if the first information further comprises a fourth error, the method further comprises:
determining, by the time synchronization function network element, that the fourth error is less than or equal to the second error, wherein the fourth error is an error generated according to a current time provision method of the first access network device; and
sending, by the time synchronization function network element, a time provision indication to the first access network device, wherein the time provision indication indicates the first access network device to provide time for the first terminal device by using the current time provision method.

7. The method according to any one of claims 1 to 5, wherein the method further comprises:
receiving, by the time synchronization function network element, second information, wherein the second information indicates that the first access network device cannot provide time for the first terminal device, and the second information is sent when the first access network device determines that at least one time provision method supported by the first access network device cannot meet a time provision requirement of the second error.

8. The method according to any one of claims 1 to 7, wherein the method further comprises:
determining, by the time synchronization function network element, at least one second access network device, wherein the at least one second access network device provides time for at least one second terminal device, and the at least one second terminal device and the first terminal device belong to one generalized precision time protocol gPTP instance; and
sending, by the time synchronization function network element, the second error to the at least one second access network device.

9. The method according to claim 8, wherein the method further comprises:
receiving, by the time synchronization function network element, third information of a second device, wherein the third information indicates the at least one second access network device, and the second device comprises a mobility management network element or an operation, administration, and maintenance OAM device.

10. A time synchronization method, comprising:
receiving, by a time synchronization function network element, fourth information of a third device, wherein the fourth information indicates information indicating that clock synchronization quality of a first user plane function network element changes; and
determining, by the time synchronization function network element, a fifth error of at least one second access network device based on the fourth information, and determining whether the fifth error meets at least one total time provision error configured by a network for at least one first service, wherein the at least one first service one-to-one corresponds to the at least one total time provision error, and the fifth error is an error generated when clock quality of the first user plane function network element changes.

11. The method according to claim 10, wherein when the fifth error does not meet the total time provision error configured by the network for the first service, the method further comprises:
determining, by the time synchronization network element, a second error of the at least one second access network device based on the fourth information, wherein the second error is used by the at least one second access network device to provide time for at least one second terminal device, and the at least one second terminal device belongs to one generalized precision time protocol gPTP instance; and
sending, by the time synchronization function network element, the second error to the second access network device.

12. The method according to claim 10 or 11, wherein the fourth information further comprises an identifier of the first user plane function network element.

13. The method according to any one of claims 10 to 12, wherein the third device comprises the first user plane function network element or an operation, administration, and maintenance OAM device.

14. The method according to any one of claims 9 to 11, wherein the method further comprises:
receiving, by the time synchronization function network element, third information of an operation, administration, and maintenance OAM device, wherein the third information indicates the at least one second access network device.

15. The method according to claim 14, wherein if the third information comprises at least one sixth error, the sending, by the time synchronization function network element, the second error to the second access network device further comprises: sending, by the time synchronization function network element, the second error when determining that the sixth error is less than or equal to the second error, wherein the at least one sixth error is an error generated due to a time provision capability of the at least one second access network device.

16. The method according to claim 14 or 15, wherein if the third information further comprises at least one seventh error, and the seventh error is less than or equal to the second error, the method further comprises:
determining, by the time synchronization function network element, that the seventh error is less than or equal to the second error, wherein the at least one seventh error is an error generated according to a current time provision method of the at least one second access network device; and
sending, by the time synchronization function network element, a time provision indication to the second access network device, wherein the time provision indication indicates the second access network device to provide time for the second terminal device by using the current time provision method.

17. The method according to any one of claims 10 to 15, wherein the method further comprises:
receiving, by the time synchronization function network element, second information, wherein the second information indicates that the second access network device cannot provide time for the second terminal device, and the second information is sent when the second access network device determines that at least one time provision method supported by the second access network device cannot meet a time provision requirement of the second error.

18. The method according to claim 17, wherein the method further comprises:
deleting, by the time synchronization function network element, a device-side time sensitive networking translator DS-TT of the second terminal device in the generalized precision time protocol gPTP instance.

19. A time synchronization method, comprising:
sending, by a first access network device, first information, wherein the first information indicates information indicating that clock synchronization quality of the first access network device changes;
receiving, by the first access network device, a second error, wherein the second error is determined based on the first information;
determining, by the first access network device, whether at least one time provision method supported by the first access network device meets a time provision requirement of the second error; and
when the first access network device determines that the at least one time provision method supported by the first access network device meets the time provision requirement of the second error, determining, by the first access network device, a first time provision method from the at least one time provision method based on the second error, wherein the first time provision method is used by the first access network device to provide time for a first terminal device; or
when the first access network device determines that the at least one time provision method supported by the first access network device cannot meet the time provision requirement of the second error, sending, by the first access network device, second information, wherein the second information indicates that the first access network device cannot provide time for the first terminal device.

20. The method according to claim 19, wherein the first information further comprises an identifier of the first access network device, and/or the first information comprises a first error of the first access network device, and the first error is an error generated when clock quality of the first access network device changes.

21. The method according to claim 19 or 20, wherein if the first information further comprises a third error, the receiving, by the first access network device, a second error further comprises: receiving the second error when the third error is less than or equal to the second error, wherein the third error is an error generated due to a time provision capability of the first access network device.

22. The method according to any one of claims 19 to 21, wherein if the first information further comprises a fourth error, and the fourth error is less than or equal to the second error, the method further comprises:
receiving, by the first access network device, a time provision indication, wherein the time provision indication indicates the first access network device to provide time for the first terminal device by using a current time provision method, and the fourth error is an error generated according to the current time provision method of the first access network device; and
determining, by the first access network device, the current time provision method as the first time provision method based on the time provision indication.

23. A communication apparatus, comprising:
a processor, wherein the processor is coupled to a memory, and the memory is configured to store a program or instructions; and when the program or the instructions are executed by the processor, the apparatus is enabled to perform the time synchronization method according to any one of claims 1 to 22.

24. A computer-readable storage medium, wherein the computer-readable storage medium stores a computer program; and when the computer program is run on a computer, the computer is enabled to perform the time synchronization method according to any one of claims 1 to 22.

25. A computer program product, comprising computer program code, wherein when the computer program code is run, the time synchronization method according to any one of claims 1 to 22 is implemented.
